# NEUE EUROPÄISCHE PATENTSCHRIFT

(11) **EP 1 093 960 B2**
(45) Veröffentlichungstag und Bekanntmachung des Hinweises auf die Entscheidung über den Einspruch: **05.05.2010**
(45) Hinweis auf die Patenterteilung: 21.09.2005
(21) Anmeldenummer: 00120195.3
(22) Anmeldetag: 22.09.2000
(51) Int. Cl.: B60N 2/06

(54) **Einstiegshilfe für Fondsitze**
Get-in help for rear seats
Aide pour l'accès aux sièges arrières

(30) Priorität: 23.10.1999 DE 19951120
(43) Veröffentlichungstag der Anmeldung: 25.04.2001
(73) Patentinhaber: Volkswagen Aktiengesellschaft, 38436 Wolfsburg (DE)
(72) Erfinder: Pietsch, Matthias, 38154 Königslutter (DE); Michniacki, Matthias, Dipl.-Ing., 38440 Wolfsburg (DE)
(74) Vertreter: Obst, Bernhard

(56) Entgegenhaltungen:
- EP-A1- 0 260 631
- DE-A- 3 933 562
- DE-A- 4 026 090
- DE-A- 4 034 529
- DE-A- 19 630 223
- DE-A1- 19 849 617
- US-A- 4 547 718
- US-A- 4 669 780

## Beschreibung

Die Erfindung betrifft eine Vorrichtung zur Erleichterung des Ein- und/oder Ausstieges zu bzw. von einem hinter einem Vordersitz angeordneten Fondsitz eines zumindest viertürigen Kraftfahrzeuges, mit einer Steuereinrichtung, welcher ein Signal einer Einrichtung zum Erfassen eines Einstieges zu dem Fondsitz und/oder ein Signal einer Einrichtung zum Erfassen eines Ausstieges von dem Fondsitz zuführbar ist, sowie ein Verfahren zur Erleichterung des Ein- und/oder Ausstieges zu bzw. von einem hinter dem Vordersitz angeordneten Fondsitz, bei dem ein Einstieg zu dem Fondsitz und/oder ein Ausstieg von dem Fondsitz erfaßt wird.

Eine Einrichtung zur Erleichterung des Einstieges zu einem Fondsitz eines viertürigen Kraftfahrzeuges ist aus der Deutschen Patentschrift DE 196 30 223 C2 bekannt. In dieser Druckschrift wird vorgeschlagen, bei der Erfassung eines beabsichtigten Einstieges durch einen Türkontaktschalter, welcher der hinteren Fahrzeugtür auf der Einstiegsseite zu dem Fondsitz zugeordnet ist, den vor dem Fondsitz befindlichen Vordersitz nach vom zu verlegen. Die Vorverlegung des Vordersitzes soll jedoch nur erfolgen, wenn der Vordersitz unbelegt ist. Dies hat den Nachteil, daß die bekannte Einstiegshilfe nur dann wirksam wird, wenn sich tatsächlich kein Insasse auf dem Vordersitz befindet. Außerdem wird bei dieser Lösung, das gleichzeitige Einsteigen zum Vordersitz erschwert.

Aus der EP 0 260 631 A1 ist eine Vorrichtung zum Anpassen der Neigung eines Rücksitzes eines Fahrzeugs bekannt. Über einen elektromechanischen Antrieb kann eine Sitzpolsteranordnung vor und zurück bewegt werden, die gelenkig mit einer Rückenlehne verbunden ist und so eine Neigung dieser variieren kann. Die Vorrichtung verfügt über erste elektrische Steuermittel für den Antrieb. Die Vorrichtung umfasst zweite elektrische Mittel, die bei einem Öffnen der Fahrzeugtür eine Bewegung der Sitzpolsteranordnung in eine zurückgezogene Endstellung bewirken, in der die Rückenlehne weniger geneigt ist.

Die Aufgabe der Erfindung ist es deshalb, eine Vorrichtung und ein Verfahren zur Ein- und/oder Ausstiegserleichterung zu bzw. von einem Fondsitz eines viertürigen Kraftfahrzeuges zu schaffen, mittels deren Ein- und Ausstiegsvorgänge zu den Fondsitzen auch dann erleichtert werden, wenn sich auf dem vor dem jeweiligen Fondsitz angeordneten Vordersitz ein Insasse befindet bzw. der Vordersitz belegt ist.

Die Lösung der Aufgabe erfolgt durch eine Vorrichtung mit den Merkmalen des Patentanspruchs 1 und ein Verfahren mit den Merkmalen des Patentanspruchs 11. Die entsprechenden Unteransprüche stellen vorteilhafte Aus- und Weiterbildungen dar.

Gemäß dem erfindungsgemäßen Verfahren ist vorgesehen, daß bei dem Erfassen eines beabsichtigten Einstieges zu dem Fondsitz und/oder bei dem Erfassen eines beabsichtigten Ausstieges aus dem Kraftfahrzeug von dem Fondsitz der Fondsitz in Längsrichtung in eine definierte hintere Stellung verschoben wird. Dazu weist die erfindungsgemäße Vorrichtung eine Betätigungseinrichtung auf, mit welcher der Fondsitz in Längsrichtung zwischen einer vorderen und einer hinteren Endstellung verschiebbar ist. Die Steuereinrichtung, welche ein Stellsignal für die Betätigungseinrichtung erzeugt, ist derart ausgebildet, daß bei dem Erfassen eines beabsichtigten Einstieges zu dem Fondsitz und/oder bei Erfassen eines beabsichtigten Ausstieges von dem Fondsitz ein Stellsignal zum Verschieben des Fondsitzes in eine definierte hintere Stellung erzeugt und der Betätigungseinrichtung zugeführt wird.

Die Erfindung hat damit den Vorteil gegenüber dem Stand der Technik, daß unabhängig davon, ob der vor dem Fondsitz angeordnete Vordersitz durch einen Insassen belegt ist oder nicht, immer genügend Bewegungsfreiheit für die ein- oder aussteigende Person am Fondsitz geschaffen wird.

Die definierte hintere Stellung, in welche der Fondsitz zur Schaffung der Bewegungsfreiheit gebracht wird, kann sowohl die hintere Endstellung des Sitzes als auch eine individuell vorgegebene hintere Stellung sein.

Gemäß einer vorteilhaften Weiterbildung der Erfindung wird als beabsichtigter Einstieg die Betätigung eines äußeren Türgriffes oder das Öffnen der Tür an sich über einen Türkontaktschalter erfaßt. Ein beabsichtigter Ausstieg kann einmal über das Betätigen eines inneren Türgriffs oder das Öffnen der Tür von innen aber auch durch das Öffnen des dem entsprechenden Fondsitz zugeordneten Gurtschlosses erkannt werden.

Eine weitere Ausgestaltung der Erfindung sieht für eine noch größere Bewegungsfreiheit vor, das zusätzlich zum Rückverlagem des Fondsitzes der vor dem Fondsitz angeordnete Vordersitz nach vom verlagert wird.

Dazu ist vorteilhafterweise eine zusätzliche (zweite) Betätigungseinrichtung vorgesehen, mit der der Vordersitz in Längsrichtung zwischen einer vorderen und einer hinteren Endstellung verschiebbar ist, und die Steuereinrichtung erzeugt bei Erfassen eines beabsichtigten Einstieges zu dem Fondsitz und/oder bei Erfassen eines beabsichtigten Ausstieges von dem Fondsitz zusätzlich ein Stellsignal für die Betätigungseinrichtung zum Verschieben des Vordersitzes in eine definierte vordere Stellung.

Die Verstellung des Vordersitzes sollte jedoch nur durchgeführt werden, wenn durch eine Einrichtung zur Sitzbelegungserkennung erkannt wird, daß der Sitz durch die Insassen nicht belegt ist.

Ein weiterer Gedanke besteht außerdem darin, daß nach Erfassen eines Abschließvorganges des Kraftfahrzeuges die Fondsitze und/oder die Vordersitze in eine definierte Grundstellung gebracht werden. Dabei können zusätzlich die Rückenlehnen sowie die Sitztiefeneinstellung und/oder die Sitzhöheneinstellung einbezogen werden. Auch ist denkbar, bei Erfassen des Abschließvorganges des Kraftfahrzeuges mindestens eine Kopfstütze der Fahrzeugsitze in eine definierte Grundstellung zu bringen.

Den letzteren Aspekten gemäß einer Weiterbildung der Erfindung liegt der Umstand zugrunde, daß bei einem Wechsel der Insassen die Sitzeinstellung erleichtert werden soll. Das Zurückbringen der Kopfstützen, insbesondere der hinteren Fahrzeugsitze bei Verlassen des Kraftfahrzeuges hat zusätzlich den Vorteil, daß keine ausgefahrene Kopfstütze bei unbelegtem Fahrzeugsitz die rückwärtige Sicht des Fahrzeugführers beeinträchtigt und ein zusätzlicher Bedienvorgang, nämlich das bewußte Verstellen der Kopfstützen vermieden wird.

Nachfolgend wird die Erfindung anhand von Ausführungsbeispielen näher beschrieben. Die zugehörigen Zeichnungen zeigen:
- Figur 1: eine Variante der erfindungsgemäßen Vorrichtung, bei der der Fondsitz verschoben wird,
- Figur 2: eine weitere Variante der erfindungsgemäßen Vorrichtung, bei der neben dem Fondsitz auch der Vordersitz verschoben wird und
- Figur 3: eine dritte Variante der erfindungsgemäßen Vorrichtung.

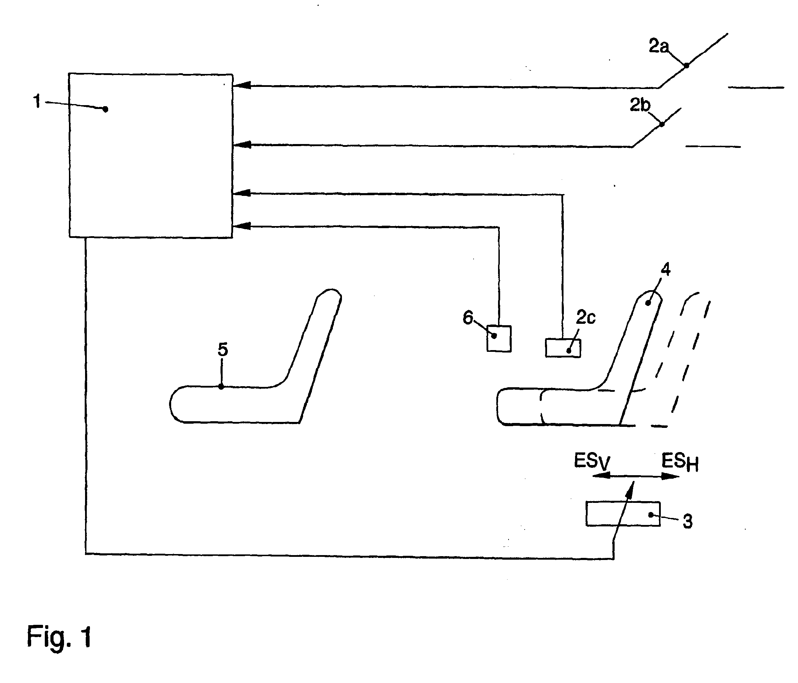

Das Ausführungsbeispiel nach Figur 1 zeigt schematisch einen Fondsitz 4 und einen vor dem Fondsitz direkt angeordneten Vordersitz 5 eines Kraftfahrzeuges, wobei sowohl neben dem Vordersitz als auch neben dem Fondsitz weitere Fahrzeugsitze angeordnet sein können. Der Fondsitz 4 ist in Fahrzeuglängsrichtung über die ebenfalls schematisch dargestellte Betätigungseinrichtung 3 zwischen einer vorderen Endstellung ES_{V} und einer hinteren Endstellung ES_{H} verschiebbar angeordnet. Die Steuereinrichtung 1 erzeugt die Stellsignale zur elektrischen Verstellung des Fondsitzes 4. Der Steuereinrichtung 1 werden dazu sowohl die Signale einer elektrischen Bedieneinrichtung 6 zur Verstellung des Fondsitzes 4 als auch zumindest die Signale eines Türkontaktschalters 2a zugeführt, der beispielsweise mit dem äußeren Türgriff der hinteren Fahrzeugtür auf der Einstiegsseite zu dem Fondsitz in Wirkverbindung steht. Wird nun über den Türkontaktschalter 2a der Steuereinrichtung 1 ein beabsichtigter Einstieg in das Kraftfahrzeug zum Fondsitz 4 angezeigt, erzeugt dieser ein Stellsignal für die Betätigungseinrichtung 3 zum Zurückfahren des Fondsitzes 4 in die hintere Endstellung ES_{H}, wodurch für die einsteigende Person ein erweiterter Bewegungsraum geschaffen wird.

Zusätzlich kann für den erleichterten Ausstieg aus dem Kraftfahrzeug von dem Fondsitz 4 vorgesehen sein, daß über den Türkontaktschalter 2b, der mit dem inneren Türgriff der Fahrzeugtür auf der Ausstiegsseite zu dem Fondsitz 4 in Wirkverbindung steht, ein beabsichtigter Ausstieg eines Insassens von dem Fondsitz 4 sensiert und der Steuereinrichtung 1 zugeführt wird. Diese erzeugt dann zur Verbesserung der Bewegungsfreiheit beim Ausstieg ein Stellsignal für die Betätigungseinrichtung 3 zum Verschieben des Fondsitzes 4 in die hintere Endstellung ES_{H}. Ein beabsichtigter Ausstieg eines Insassen vom Fondsitz 4 kann zusätzlich zum Türkontaktschalter 2b durch eine Einrichtung 2c sensiert werden, die das Öffnen des Gurtschlosses des dem Fondsitz zugeordneten Sicherheitsgurtes erfaßt. Denkbar ist auch, daß nur die Einrichtung 2c den beabsichtigten Ausstieg ermittelt.

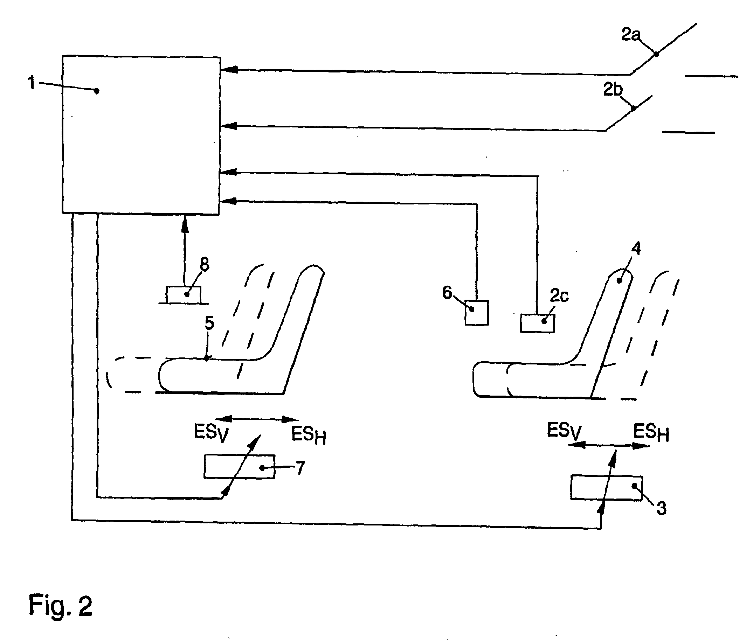

Das in Figur 2 dargestellte Ausführungsbeispiel weist im Prinzip den gleichen Aufbau auf, wie die in Figur 1 dargestellte erfindungsgemäße Vorrichtung. Auch hier wird bei Erfassung eines beabsichtigten Einstieges und/oder Ausstieges zum bzw. vom Fondsitz 4 von der Betätigungseinrichtung 3 der Fondsitz in seine hintere Endstellung ES_{H} verlagert. Zusätzlich wird jedoch bei einem von dem Türkontaktschalter 2a erfaßten Einstieg auf den Fondsitz 4 und/oder bei einem von dem Türkontaktschalter 2b und/oder der Einrichtung 2c zum Erfassen des Öffnens des Gurtschlosses sensierten Ausstieg von dem Fondsitz von der Steuereinrichtung 1 ein Stellsignal für die Betätigungseinrichtung 7 erzeugt, welche den vor dem Fondsitz 4 befindlichen Vordersitz 5 in seine vordere Endstellung ES_{V} verbringt. Für die Sicherheit eventueller Insassen auf dem Vordersitz 5 muß jedoch über die Einrichtung 8 zum Erfassen einer Sitzbelegung ermittelt worden sein, daß der Vordersitz 5 nicht belegt ist. Befinden sich Insassen auf dem Vordersitz 5 wird die Verschiebung desselben gesperrt.

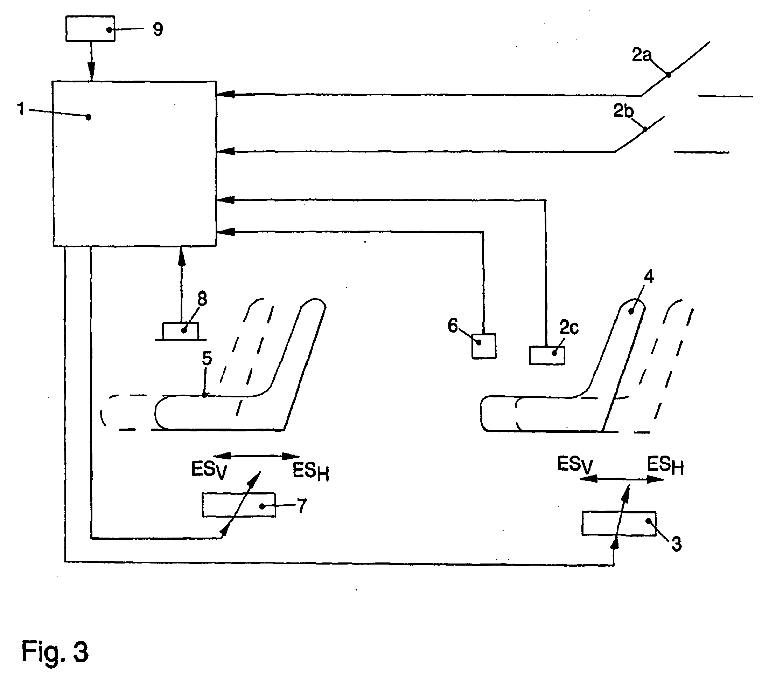

In einem weiteren Ausführungsbeispiel, wie es in Figur 3 gezeigt ist, ist die Steuereinrichtung 1 zusätzlich mit einer Einrichtung 9 zum Erfassen des Abschließens des Fahrzeuges nach dem Verlassen der Insassen verbunden. Wird der Steuereinrichtung 1 nun ein entsprechendes Signal zugeführt, erzeugt diese Stellsignale an die Betätigungseinrichtungen 3 und 7 der Fond- und Vordersitze 4, 5 zum Verbringen derselben in eine definierte Grundposition, dabei kann vorteilhafterweise nicht nur die Position der Sitze in Längsrichtung einbezogen werden, sondern auch alle weiteren Sitzverstellmöglichkeiten.

### BEZUGSZEICHENLISTE

- 1: Steuereinrichtung
- 2a: Türkontaktschalter zur Ermittlung des Einstieges
- 2b: Türkontaktschalter zur Ermittlung des Ausstieges
- 2c: Öffnung des Gurtschlosses
- 3: Betätigungseinrichtung
- 4: Fondsitz
- 5: Vordersitz
- 6: Bedieneinrichtung
- 7: Betätigungseinrichtung
- 8: Einrichtung zur Sitzbelegungserkennung
- 9: Einrichtung zum Erfassen des Abschließens des Kraftfahrzeuges
- ES_{V}: vordere Endstellung
- ES_{H}: hintere Endstellung

## Patentansprüche

1. Vorrichtung zur Erleichterung des Ein- und/oder Ausstieges zu bzw. von einem hinter einem Vordersitz (5) angeordneten Fondsitz (4) eines zumindest viertürigen Kraftfahrzeuges, wobei die Vorrichtung mit einer Steuereinrichtung (1) versehen ist, welcher ein Signal einer ersten Einrichtung (2a) zum Erfassen eines Einstieges zu dem Fondsitz (4) eines zumindest viertürigen Kraftfahrzeuges und/oder ein Signal einer zweiten Einrichtung (2b) zum Erfassen eines Ausstieges von dem Fondsitz (4) eines zumindest viertürigen Kraftfahrzeuges zuführbar ist bzw. zugeführt ist,
wobei
eine Betätigungseinrichtung (3) vorgesehen ist, mit welcher ein Fondsitz (4) eines zumindest viertürigen Kraftfahrzeuges in Längsrichtung zwischen einer vorderen und einer hinteren Endstellung (ES_{V}, ES_{H}) verschiebbar ist und beim Ein- bzw. Aussteigen zu bzw. von dem Fondsitz (4) verschoben wird, und die Steuereinrichtung (1) derart ausgebildet ist, daß bei Erfassen eines Einstieges zu dem Fondsitz (4) durch die erste Einrichtung (2a), welche die Betätigung eines äußeren Türgriffs erfasst, und/oder bei Erfassen eines Ausstieges von dem Fondsitz (4) durch die zweite Einrichtung (2b), welche das Betätigen eines inneren Türgriffs erkennt, die Steuereinrichtung (1) ein Stellsignal zum Verschieben des Fondsitzes (4) in eine definierte hintere Stellung erzeugt und der Betätigungseinrichtung (3) zuführt.

2. Vorrichtung nach Anspruch 1, **dadurch gekennzeichnet, daß** die definierte hintere Stellung die hintere Endstellung (ES_{H}) ist.

3. Vorrichtung nach Anspruch 1, **dadurch gekennzeichnet, daß** die definierte hintere Stellung individuell vorgebbar und abspeicherbar ist.

4. Vorrichtung nach einem der Ansprüche 1 bis 3, **dadurch gekennzeichnet, daß** die erste Einrichtung zum Erfassen eines beabsichtigten Einstieges zu dem Fondsitz (4) ein Türkontaktschalter (2a) ist, welcher mit dem äußeren Türgriff der hinteren Fahrzeugtür auf der Einstiegsseite zu dem Fondsitz (4) in Wirkbeziehung steht.

5. Vorrichtung nach einem der Ansprüche 1 bis 4, **dadurch gekennzeichnet, daß** die zweite Einrichtung zum Erfassen eines beabsichtigten Ausstieges von dem Fondsitz (4) ein Türkontaktschalter (2b), ist welcher mit dem inneren Türgriff der hinteren Fahrzeugtür auf der Ausstiegsseite von dem Fondsitz (4) in Wirkbeziehung steht.

6. Vorrichtung nach einem der Ansprüche 1 bis 5, **gekennzeichnet durch** eine weitere Einrichtung (2c) zum Erfassen des Öffnens eines Gurtschlosses des Fahrzeugsitzes, wobei die Steuereinrichtung (1) derart ausgebildet ist, daß auch bei Erfassen eines Ausstieges von dem Fondsitz (4) **durch** die weitere Einrichtung (2c) zum Erfassen des Öffnens eines Gurtschlosses des Fondsitzes (4) die Steuereinrichtung (1) das Stellsignal zum Verschieben des Fondsitzes (4) in die definierte hintere Stellung erzeugt und der Betätigungseinrichtung (3) zuführt.

7. Vorrichtung nach einem der Ansprüche 1 bis 6, **dadurch gekennzeichnet, dass**, zusätzlich, eine zweite Betätigungseinrichtung (7) vorgesehen ist, mit der der vor dem Fondsitz (4) befindliche Vordersitz (5) in Längsrichtung zwischen einer vorderen und einer hinteren Endstellung (ES_{V}, ES_{H}) verschiebbar ist und die Steuereinrichtung (1) derart ausgebildet ist, daß bei Erfassen eines beabsichtigten Einstieges zu dem Fondsitz (4) durch die erste Einrichtung (2a) und/oder bei Erfassen eines Ausstieges von dem Fondsitz durch die zweite Einrichtung (2b) oder die weitere Einrichtung (2c) die Steuereinrichtung (1) ein Stellsignal zum Verschieben des Vordersitzes (5) in eine definierte vordere Stellung erzeugt und der Betätigungseinrichtung (7) zuführt.

8. Vorrichtung nach Anspruch 7, **dadurch gekennzeichnet, daß** die Steuereinrichtung (1) mit einer Einrichtung (8) zum Erfassen einer Sitzbelegungserkennung verbunden ist und das Stellsignal zum Verschieben des Vordersitzes (5) nur erzeugt, wenn durch die Einrichtung (8) keine Sitzbelegung auf dem Vordersitz (5) erkannt wird.

9. Vorrichtung nach Anspruch 7 oder 8, **dadurch gekennzeichnet, daß** die definierte vordere Stellung des Vordersitzes (5) die vordere Endstellung (ES_{V}) ist.

10. Vorrichtung nach einem der Ansprüche 1 bis 9, **dadurch gekennzeichnet, daß** eine Einrichtung (9) zum Erfassen eines Abschließvorganges des Kraftfahrzeuges vorgesehen ist, die mit der Steuereinrichtung (1) verbunden ist, und die Steuereinrichtung (1) derart ausgebildet ist, daß bei dem Erfassen des Abschließvorganges des Kraftfahrzeuges durch die Einrichtung (9) die Steuereinrichtung (1) ein Stellsignal zum Verschieben der Fahrzeugsitze (4, 5) in eine definierte Grundstellung an die Betätigungseinrichtungen (3, 7) der Fahrzeugsitze abgibt.

11. Vorrichtung nach einem der Ansprüche 1 bis 10, **dadurch gekennzeichnet, daß** eine Einrichtung (9) zum Erfassen eines Abschließvorganges des Kraftfahrzeuges vorgesehen ist, die mit mindestens einer Steuereinrichtung (1) verbunden ist, mit welcher ein Stellsignal zum Einstellen mindestens einer Kopfstütze eines Fahrzeugsitzes (4, 5) zwischen zwei Endstellungen erzeugbar ist, und die Steuereinrichtung (1) derart ausgebildet ist, daß bei dem Erfassen des Abschließvorganges des Kraftfahrzeuges durch die Einrichtung (9) die Steuereinrichtung (1) ein Stellsignal zum Einstellen der Kopfstütze in eine definierte Grundposition an deren Betätigungseinrichtung erzeugt.

12. Verfahren zur Erleichterung des Ein- und/oder Ausstieges zu bzw. von einem hinter einem Vordersitz (5) angeordneten Fondsitz (4) eines zumindest viertürigen Kraftfahrzeuges, bei dem ein beabsichtigter Einstieg zu dem Fondsitz (4) und/oder ein beabsichtigter Ausstieg von dem Fondsitz (4) erfaßt wird, **dadurch gekennzeichnet, daß** als der beabsichtigte Einstieg zu dem Fondsitz (4) eine Betätigung eines äußeren Türgriffs erfaßt wird und/oder als beabsichtigter Ausstieg von dem Fondsitz (4) das Betätigen eines inneren Türgriffs erkannt wird und bei dem Erfassen eines Einstieges zu dem Fondsitz (4) und/oder bei dem Erfassen eines Ausstieges von dem Fondsitz der Fondsitz (4) in eine definierte hintere Stellung verschoben wird.

13. Verfahren nach Anspruch 12, **dadurch gekennzeichnet, daß** ein beabsichtigter Einstieg zu einem der Fondsitze (4) über einen Türkontaktschalter (2a), welcher mit dem äußeren Türgriff der hinteren Fahrzeugtür auf der Einstiegsseite zu dem Fondsitz (4) in Wirkverbindung steht, erfaßt wird.

14. Verfahren nach Anspruch 12 oder 13 , **dadurch gekennzeichnet, daß** ein beabsichtigter Ausstieg von einem der Fondsitze über einen Türkontaktschalter (2b), welcher mit einem inneren Türgriff der hinteren Fahrzeugtür auf der Ausstiegsseite von dem Fondsitz (4) in Wirkverbindung steht, und auch über das Öffnen eines Gurtschlosses (2c) des Fahrzeugsitzes erfaßt wird.

15. Verfahren nach einem der Ansprüche 12 bis 14, **dadurch gekennzeichnet, daß** bei dem Erfassen eines Einstieges zu dem Fondsitz (4) und/oder bei dem Erfassen eines Ausstieges von dem Fondsitz (4) zusätzlich der vor dem Fondsitz (4) angeordnete Vordersitz (5) in eine definierte vordere Stellung verschoben wird.

16. Verfahren nach Anspruch 15, **dadurch gekennzeichnet, daß** der Vordersitz (5) nur verschoben wird, wenn durch eine Einrichtung (8) zur Erfassung einer Sitzbelegung keine Sitzbelegung des Vordersitzes (5) erkannt wird.

17. Verfahren nach einem der Ansprüche 12 bis 16, **dadurch gekennzeichnet, daß** bei dem Erfassen eines Abschließvorganges des Kraftfahrzeuges mindestens einer der Fahrzeugsitze (4, 5) in eine definierte Grundstellung verschoben werden.

18. Verfahren nach einem der Ansprüche 12 bis 17, **dadurch gekennzeichnet, daß** bei dem Erfassen eines Abschließvorganges des Kraftfahrzeuges eine zwischen zwei Endstellungen verschiebbare Kopfstütze mindestens eines Fahrzeugsitzes (4, 5) in eine definierte Grundstellung verschoben wird.

## Claims

1. Device for making it easier for a person to get into and/or out of a rear seat (4), which is arranged behind a front seat (5), of a motor vehicle having at least four doors, the device being provided with a control device (1) which can be supplied with or is supplied with a signal from a first device (2a) for sensing that a person is getting into the rear seat (4) of a motor vehicle having at least four doors, and/or with a signal from a second device (2b) for sensing that a person is getting out of the rear seat (4) of a motor vehicle having at least four doors, wherein an actuating device (3) is provided with which a rear seat (4) of a motor vehicle having at least four doors can be displaced in the longitudinal direction between a front and a rear end position (ES_{V}, ES_{H}) and is displaced when a person gets into or out of the rear seat (4), and the control device (1) is designed in such a manner that, when the first device (2a), which senses the actuation of an external door handle, senses that a person is getting into the rear seat (4) and/or when the second device (2b), which detects the actuation of an internal door handle, senses that a person is getting out of the rear seat (4), the control device (1) generates an actuating signal for displacing the rear seat (4) into a defined rear position and supplies it to the actuating device (3).

2. Device according to Claim 1, **characterized in that** the defined rear position is the rear end position (ES_{H}).

3. Device according to Claim 1, **characterized in that** the defined rear position can be individually predetermined and stored.

4. Device according to one of Claims 1 to 3, **characterized in that** the first device for sensing that a person is intentionally getting into the rear seat (4) is a door contact switch (2a) which is operatively connected to the external door handle of the rear vehicle door on the side on which the person gets into the rear seat (4).

5. Device according to one of Claims 1 to 4, **characterized in that** the second device for sensing that a person is intentionally getting out of the rear seat (4) is a door contact switch (2b) which is operatively connected to the internal door handle of the rear vehicle door on the side on which the person gets out of the rear seat (4).

6. Device according to one of Claims 1 to 5, **characterized by** a further device (2c) for sensing the opening of a belt buckle of the vehicle seat, with the control device (1) being designed in such a manner that, also when the further device (2c) for sensing the opening of a belt buckle of the rear seat (4) senses that a person is getting out of the rear seat (4), the control device (1) generates the actuating signal for displacing the rear seat (4) into the defined rear position and supplies it to the actuating device (3).

7. Device according to one of Claims 1 to 6, **characterized in that**, in addition, a second actuating device (7) is provided with which the front seat (5) which is situated in front of the rear seat (4) can be displaced in the longitudinal direction between a front and a rear end position (ES_{V}, ES_{H}), and the control device (1) is designed in such a manner that, when the first device (2a) senses that a person is intentionally getting into the rear seat (4) and/or when the second device (2b) or the further device (2c) senses that a person is getting out of the rear seat, the control device (1) generates an actuating signal for displacing the front seat (5) into a defined front position and supplies it to the actuating device (7).

8. Device according to Claim 7, **characterized in that** the control device (1) is connected to a device (8) for sensing that a seat is occupied and only generates the actuating signal for displacing the front seat (5) when the device (8) detects that the front seat (5) is not occupied.

9. Device according to Claim 7 or 8, **characterized in that** the defined front position of the front seat (5) is the front end position (ES_{V}) .

10. Device according to one of Claims 1 to 9, **characterized in that** a device (9) for sensing a locking operation of the motor vehicle is provided, which device is connected to the control device (1), and the control device (1) is designed in such a manner that, when the device (9) senses the locking operation of the motor vehicle, the control device (1) outputs an actuating signal for displacing the vehicle seats (4, 5) into a defined basic position to the actuating devices (3, 7) of the vehicle seat.

11. Device according to one of Claims 1 to 10, **characterized in that** a device (9) for sensing a locking operation of the motor vehicle is provided, which device is connected to at least one control device (1) with which an actuating signal for adjusting at least one head restraint of a vehicle seat (4, 5) between two end positions can be generated, and the control device (1) is designed in such a manner that, when the device (9) senses the locking operation of the motor vehicle, the control device (1) generates an actuating signal for adjusting the head restraint into a defined basic position to the actuating device thereof.

12. Method for making it easier for a person to get into and/or out of a rear seat (4), which is arranged behind a front seat (5) of a motor vehicle having at least four doors, in which a person intentionally getting into the rear seat (4) and/or intentionally getting out of the rear seat (4) is sensed, **characterized in that** an actuation of an external door handle is sensed as a person intentionally getting into the rear seat (4) and the actuation of an internal door handle is sensed as a person intentionally getting out of the rear seat (4) and, upon sensing a person getting into the rear seat (4) and/or upon sensing a person getting out of the rear seat, the rear seat (4) is displaced into a defined rear position.

13. Method according to Claim 12, **characterized in that** a person intentionally getting into one of the rear seats (4) is sensed via a door contact switch (2a) which is operatively connected to the external door handle of the rear vehicle door on the side on which the person gets into the rear seat (4).

14. Method according to Claim 12 or 13, **characterized in that** a person intentionally getting out of one of the rear seats is sensed via a door contact switch (2b), which is operatively connected to an internal door handle of the rear vehicle door on the side on which the person gets out of the rear seat (4), and also via the opening of a belt buckle (2c) of the vehicle seat.

15. Method according to one of Claims 12 to 14, **characterized in that**, upon sensing a person getting into the rear seat (4) and/or upon sensing a person getting out of the rear seat (4), the front seat (5) arranged in front of the rear seat (4) is additionally displaced into a defined front position.

16. Method according to Claim 15, **characterized in that** the front seat (5) is displaced only if a device (8) for sensing that a seat is occupied detects that the front seat (5) is not occupied.

17. Method according to one of Claims 12 to 16, **characterized in that**, when a locking operation of the motor vehicle is sensed, at least one of the vehicle seats (4, 5) is displaced into a defined basic position.

18. Method according to one of Claims 12 to 17, **characterized in that**, when a locking operation of the motor vehicle is sensed, a head restraint of at least one vehicle seat (4, 5), which head restraint can be displaced between two end positions, is displaced into a defined basic position.

## Revendications

1. Dispositif pour faciliter l'accès au et/ou la sortie depuis un siège arrière (4) disposé derrière un siège avant (5) d'un véhicule automobile comprenant au moins quatre portières, le dispositif étant muni d'un dispositif de commande (1) auquel peut être acheminé ou auquel est acheminé un signal d'un premier équipement (2a) de détection d'un accès au siège arrière (4) d'un véhicule automobile comprenant au moins quatre portières et/ou un signal d'un deuxième équipement (2b) de détection d'une sortie depuis le siège arrière (4) d'un véhicule automobile comprenant au moins quatre portières, un dispositif d'actionnement (3) étant prévu avec lequel un siège arrière (4) d'un véhicule automobile comprenant au moins quatre portières peut être déplacé dans le sens longitudinal entre une position d'extrémité avant et une position d'extrémité arrière (ES_{V}, ES_{H}) et il est déplacé en cas d'accès au et/ou de sortie depuis le siège arrière (4) et le dispositif de commande (1) étant configuré de telle sorte qu'en cas de détection d'un accès au siège arrière (4) par le premier équipement (2a), qui détecte l'actionnement d'une poignée de portière extérieure et/ou en cas de détection d'une sortie depuis le siège arrière (4) par le deuxième équipement (2b), qui identifie l'actionnement d'une poignée de portière intérieure, le dispositif de commande (1) génère un signal de commande pour déplacer le siège arrière (4) dans une position arrière définie et l'achemine au dispositif d'actionnement (3).

2. Dispositif selon la revendication 1, **caractérisé en ce que** la position arrière définie est la position d'extrémité arrière (ES_{H}).

3. Dispositif selon la revendication 1, **caractérisé en ce que** la position arrière définie peut être prédéfinie et enregistrée individuellement.

4. Dispositif selon l'une des revendications 1 à 3, **caractérisé en ce que** le premier équipement de détection d'un accès envisagé au siège arrière (4) est un commutateur à contact de portière (2a) qui est en liaison active avec la poignée de portière extérieure de la portière arrière du véhicule du côté de l'accès vers le siège arrière (4).

5. Dispositif selon l'une des revendications 1 à 4, **caractérisé en ce que** le deuxième équipement de détection d'une sortie envisagée depuis le siège arrière (4) est un commutateur à contact de portière (2b) qui est en liaison active avec la poignée de portière intérieure de la portière arrière du véhicule du côté de la sortie depuis le siège arrière (4).

6. Dispositif selon l'une quelconque des revendications 1 à 5, **caractérisé par** un équipement additionnel (2c) de détection de l'ouverture d'un fermoir de ceinture du siège du véhicule, le dispositif de commande (1) étant réalisé de telle sorte que même dans le cas d'une détection d'une sortie du siège arrière (4) par l'équipement additionnel (2c) de détection de l'ouverture d'un fermoir de ceinture du siège arrière (4), le dispositif de commande (1) génère le signal de déplacement du siège arrière (4) dans la position arrière définie et l'achemine au dispositif d'actionnement (3).

7. Dispositif selon l'une des revendications 1 à 6, **caractérisé en ce qu'**il est prévu en plus un deuxième dispositif d'actionnement (7) avec lequel le siège avant (5) qui se trouve devant le siège arrière (4) peut être déplacé dans le sens longitudinal entre une position d'extrémité avant et une position d'extrémité arrière (ES_{V}, ES_{H}) et le dispositif de commande (1) est configuré de telle sorte qu'en cas de détection d'un accès envisagé au siège arrière (4) par le premier équipement (2a) et/ou en cas de détection d'une sortie depuis le siège arrière (4) par le deuxième équipement (2b) ou l'équipement additionnel, le dispositif de commande (1) génère un signal de commande pour déplacer le siège avant (5) dans une position avant définie et l'achemine au dispositif d'actionnement (7).

8. Dispositif selon la revendication 7, **caractérisé en ce que** le dispositif de commande (1) est relié à un équipement (8) pour détecter un identifiant d'occupation de siège et le signal de commande pour le déplacement du siège avant (5) n'est généré que si l'équipement (8) ne détecte pas d'occupation du siège avant (5).

9. Dispositif selon la revendication 7 ou 8, **caractérisé en ce que** la position avant définie du siège avant (5) est la position d'extrémité avant (ES_{V}).

10. Dispositif selon l'une des revendications 1 à 9, **caractérisé en ce qu'**il est prévu un équipement (9) pour détecter un processus de fermeture du véhicule automobile qui est relié avec le dispositif de commande (1) et le dispositif de commande (1) est configuré de telle sorte qu'en cas de détection d'un processus de fermeture du véhicule automobile par l'équipement (9), le dispositif de commande (1) génère un signal de commande pour déplacer les sièges du véhicule (4, 5) dans une position de base définie au niveau des dispositifs d'actionnement (3, 7) des sièges du véhicule.

11. Dispositif selon l'une des revendications 1 à 10, **caractérisé en ce qu'**il est prévu un équipement (9) pour détecter un processus de fermeture du véhicule automobile qui est relié avec au moins un dispositif de commande (1) avec lequel peut être généré un signal de commande pour régler au moins un appui-tête d'un siège de véhicule (4, 5) entre deux positions d'extrémité et le dispositif de commande (1) est configuré de telle sorte qu'en cas de détection d'un processus de fermeture du véhicule automobile par l'équipement (9), le dispositif de commande (1) génère un signal de commande pour régler l'appui-tête dans une position de base définie à l'attention de son dispositif d'actionnement.

12. Procédé pour faciliter l'accès au et/ou la sortie depuis un siège arrière (4) disposé derrière un siège avant (5) d'un véhicule automobile comprenant au moins quatre portières, avec lequel est détecté un accès envisagé au siège arrière (4) et/ou une sortie envisagée depuis le siège arrière (4), **caractérisé en ce que** l'on détecte, en tant qu'accès envisagé au siège arrière (4), un actionnement d'une poignée de portière extérieure et/ou, en tant que sortie envisagée du siège arrière (4), l'actionnement d'une poignée de portière intérieure, et lors de la détection d'un accès au siège arrière (4) et/ou lors de la détection d'une sortie depuis le siège arrière, le siège arrière (4) est déplacé dans une position arrière définie.

13. Procédé selon la revendication 12, **caractérisé en ce qu'**un accès envisagé à l'un des sièges arrière (4) est détecté par le biais d'un commutateur à contact de portière (2a) qui est en liaison active avec la poignée de portière extérieure de la portière arrière du véhicule du côté de l'accès vers le siège arrière (4).

14. Procédé selon la revendication 12 ou 13, **caractérisé en ce qu'**une sortie envisagée depuis l'un des sièges arrière est détectée par le biais d'un commutateur à contact de portière (2b) qui est en liaison active avec une poignée de portière intérieure de la portière arrière du véhicule du côté de la sortie depuis le siège arrière (4) et en outre par l'ouverture d'un fermoir de ceinture (2c) du siège du véhicule.

15. Procédé selon l'une des revendications 12 à 14, **caractérisé en ce que** lors de la détection d'un accès au siège arrière (4) et/ou lors de la détection d'une sortie depuis le siège arrière (4), le siège avant (5) qui se trouve devant le siège arrière (4) est en plus déplacé dans une position avant définie.

16. Procédé selon la revendication 15, **caractérisé en ce que** le siège avant (5) n'est déplacé que si aucune occupation du siège avant (5) n'est détectée par un équipement (8) de détection d'une occupation du siège.

17. Procédé selon l'une des revendications 12 à 16, **caractérisé en ce que** lors de la détection d'un processus de fermeture du véhicule automobile, au moins l'un des sièges du véhicule (4, 5) est déplacé dans une position de base définie.

18. Procédé selon l'une des revendications 12 à 17, **caractérisé en ce que** lors de la détection d'un processus de fermeture du véhicule automobile, un appui-tête pouvant être déplacé entre deux positions d'extrémité d'au moins l'un des sièges du véhicule (4, 5) peut être déplacé dans une position de base définie.
